# EUROPEAN PATENT APPLICATION

(11) **EP 4 730 129 A1**
(43) Date of publication of application: **22.04.2026**
(21) Application number: 24206777.5
(22) Date of filing: 15.10.2024
(51) Int. Cl.: G06F 9/54, G06F 9/50

(54) **ACCESS TO SHARED SERVICES**

(71) Applicant: Mastercard International Incorporated, Purchase, NY 10577 (US)
(72) Inventor: NIELSEN, Regin Ulf, 3000 Helsingør (DK)
(74) Representative: Keltie LLP

(57) **Abstract**

A method of providing a shared service in a managed computing environment (30) is described. A connection to the shared service is provided in the managed computing environment (30), and a binding operation is also provided that allows a client application to bind to the connection to the shared service. On a client request to connect to the shared service, access is provided to the connection to the shared service in a discrete computing environment (38). This discrete computing environment comprises a first container (381) containing the connection to the shared service and a second container (382) configured for connection to the client application for accessing the instance of the shared service.

## Description

### TECHNICAL FIELD

The present disclosure relates to access to shared services.

### BACKGROUND

Provision of shared services in an organisational environment is complex. While systems such as Kubernetes can automate, scale and manage software in an organisational environment there are still many practical challenges. Achieving effective visibility of shared services is difficult - it is not sufficient for them to be well-documented. Awareness of such services and associated policy cannot be readily enforced.

There are also a number of barriers to adoption for a shared service. Access to a shared service typically involves a multi-step onboarding process. Many of these steps are manual, and many require the organization - through multiple organizational roles - to take steps such as creation of client credentials, role definition, network configuration and so on. Such barriers inhibit adoption of shared services.

There may also be practical difficulties in use of a shared service. Many shared services require client libraries for access, or to utilise a full feature set. Deployment across a variety of runtime platforms may be required, and maintaining client libraries for such platforms (e.g..NET, Java, Python, Go, ...) is challenging, as it can be both time-consuming and challenging to keep such libraries up to date.

The present disclosure has been devised to mitigate or overcome at least some of the above-mentioned problems.

### SUMMARY OF THE DISCLOSURE

According to a first aspect of the present disclosure there is provided a method of providing a shared service in a managed computing environment, the method comprising: providing a connection to the shared service in the managed computing environment, and providing a binding operation for a client application to bind to the connection to the shared service; on a client request to connect a client application to the shared service, providing access to the connection to the shared service in a discrete computing environment, whereby the discrete computing environment comprises a first container containing the connection to the shared service and a second container configured for the client application to use the connection to the shared service.

Using this approach, connection to a shared service can be achieved straightforwardly, without the need for complicated set-up. Moreover, using this approach, shared services can be made easily discoverable. When discoverable and easy to adopt, shared services will be adopted more readily in an environment, and duplication of effort will be avoided.

In embodiments, the managed computing environment may be orchestrated by Kubernetes. The connection to the shared service may then be provided by an add-on for sharing configuration with the connection to the shared service in the discrete computing environment. Such an add-on may enable use of a mutating webhook to provide access to the connection to the shared service in the discrete computing environment, wherein the second container is a sidecar container.

In embodiments, the second container may provide a gPRC interface for the connection to the shared service. A .proto file for the gPRC interface may be provided to the client. The client application may then access the connection to the shared service through the gPRC interface using the proto file.

In embodiments, the managed computing environment may further comprise an open service broker, and creation of a connection to the shared service may be provided by an open service broker operation. The binding operation may also be an open service broker operation.

According to a second aspect of the disclosure there is provided a managed computing environment adapted to provide access to shared services, the managed computing environment comprising: a management application to manage the computing environment; a connection to the shared service exposed to the managed computing environment; and a mechanism to provide, in response to a client request to connect a client application to the shared service, access to the connection to the shared service in a discrete computing environment, whereby the discrete computing environment comprises a first container containing the connection to the shared service and a second container configured for the client application to use the connection to the shared service.

In embodiments, the management application may be Kubernetes. In certain embodiments, the managed computing environment may further comprise an open service broker, and the open service broker may be adapted to provide a connection to the shared service by an open service broker operation. This open service broker may also be adapted to provide the binding operation is an open service broker operation.

In embodiments, the managed computing may further comprise a development application for developing client applications for use in the managed computing environment, and this development application may be adapted to provide an add-on for sharing configuration with the connection to the shared service in the discrete computing environment to enable a client application to connect to the shared service. In some embodiments, this development application may be Akkeris.

### BRIEF DESCRIPTION OF THE DRAWINGS

One or more embodiments of the disclosure will now be described, by way of example only, with reference to the accompanying drawings, in which:
Figure 1 shows an exemplary managed computing environment in which shared services may be deployed;
Figure 2 illustrates a deployment of Kubernetes;
Figure 3 illustrates schematically a deployment of an embodiment of the disclosure; and
Figure 4 is a flow diagram indicating a method of providing access to shared services according to an embodiment of the disclosure.

### DETAILED DESCRIPTION

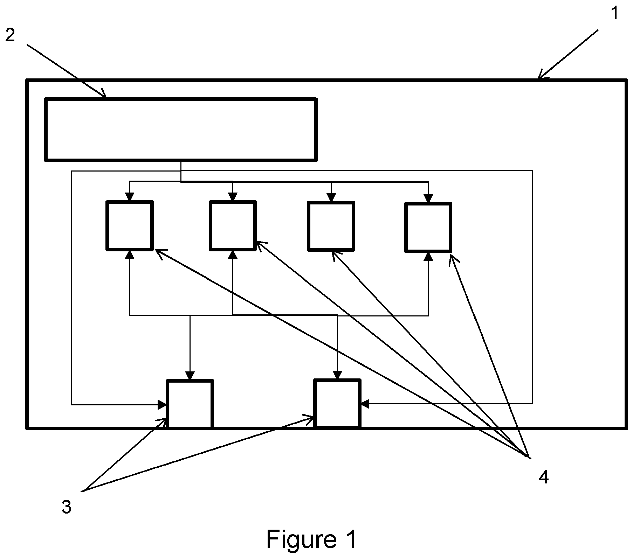

General and specific embodiments of the disclosure will be described below with reference to the Figures. Figure 1 illustrates the general situation to be addressed. A computing environment 1 is managed using management software 2, and is accessed by a plurality of client services 3. These client services 3 may wish to access shared services 4 available in the computing environment 1. Providing direct and correctly configured access of client services 3 to shared services 4 is, as described above, a challenge.

In embodiments, access to a shared service is provided through a discrete functional unit within an orchestration system which is provided with a connection interface, with the connection interface being selectable for configuration for a client service. This is here achieved using a container-based orchestration architecture, such as that provided when Kubernetes is used as management software for the computing environment. An Open Service Broker (OSB) service is here used to create a new shared service reference (or to otherwise expose the shared service as a bindable target) and to enable client services to bind to the shared service, and a gRPC interface is provided for a Kubernetes container in order to enable the client applications to connect with a correct configuration. These different systems, and system elements, will be described below, after which their interaction to provide embodiments of the disclosure will be described.

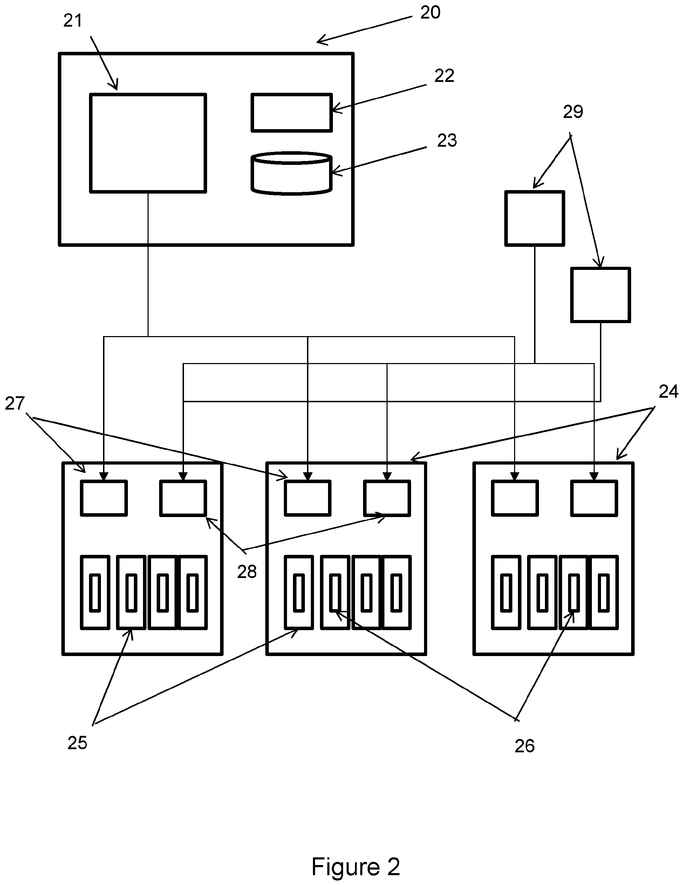

Kubernetes is a container-based orchestration system. A deployment of Kubernetes is essentially of the type shown in Figure 2 - a master node 20 comprising an API server 21 and associated control and management software 22 and a memory system 23, together with a plurality of service nodes 24 for deployment of applications. The basic element of Kubernetes is a pod 25, which typically contains one container 26, itself typically used for an instance of an application. Each service node 24 comprises a management service 27 (kubelet) responsible for the state of its node, and a proxy service 28 (kube-proxy) providing networking functions including connection to clients 29.

In an embodiment according to the disclosure, an additional Kubernetes functionality is used to enhance a pod used for a shared service instance. This is the mutating admission webhook. Generally, an admission webhook is an HTTP callback that receives an admission request, and then does something in response. Mutating admission webhooks can be used to modify objects sent to the API server 21. Here, they can be used to change the normal arrangement of a pod 25 - containing only a single container - so that it contains not only a standard container but also a sidecar container with additional functionality. As will be described below, the additional functionality provided in the sidecar container is used to ensure that a client service is connected to an appropriately configured shared service instance.

Various applications are available to facilitate deployment of code in a Kubernetes environment - one such application is Akkeris. In embodiments of the disclosure, an addon functionality, such as that which can be provided by Akkeris, is used for shared service deployment. An add-on is a mechanism that can be used to provide backing services for an application - such as databases, queuing and caching, storage and other services - and they can typically be provided so that they can be managed by any party. In Akkeris, these can be provided as attached resources, and can be provisioned by choosing from a list of available add-ons, and creating it. In Akkeris add-ons may also be attached if they already exist on another application and can be shared.

Embodiments of the disclosure use an Open Service Broker (OSB) in relation to the shared service. OSB is an informal standard (a specification is provided at https://github.com/openservicebrokerapi/servicebroker/blob/master/spec.md) that allows developers to provide services to workloads running on platforms such as Kubernetes and Cloud Foundry. Here, two types of operation are required. One is a "Provision" operation run once when a shared service is created - this creates a service connection selectable by clients. The other is a "Bind" operation - this is run by client services needing access to a shared service. The effect of running such a service in context is described below.

Embodiments of the disclosure involve access to the shared service through a gRPC interface. gRPC is a remote procedure call framework, originally developed by Google for microservices but now made open source and widely used. gRPC generally uses Protocol Buffers as a mechanism for serializing structured data (translation between Protocol Buffers and other data formats such as JSON is straightforward). The first step when working with Protocol Buffers is to define the structure for the data to be serialized in a proto file: this is an ordinary text file with a .proto extension, and it defines data structures and services with remote procedure calls.

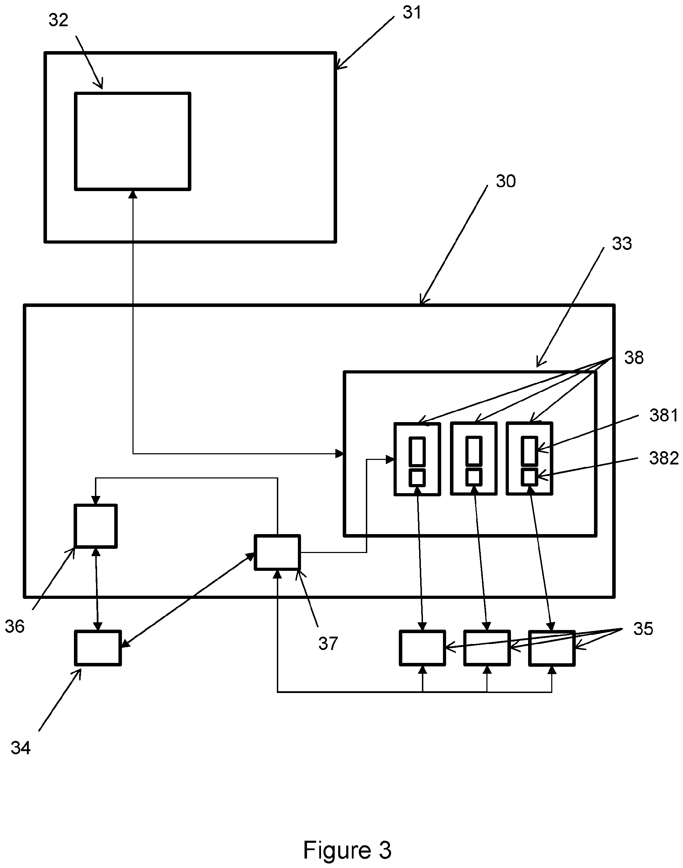

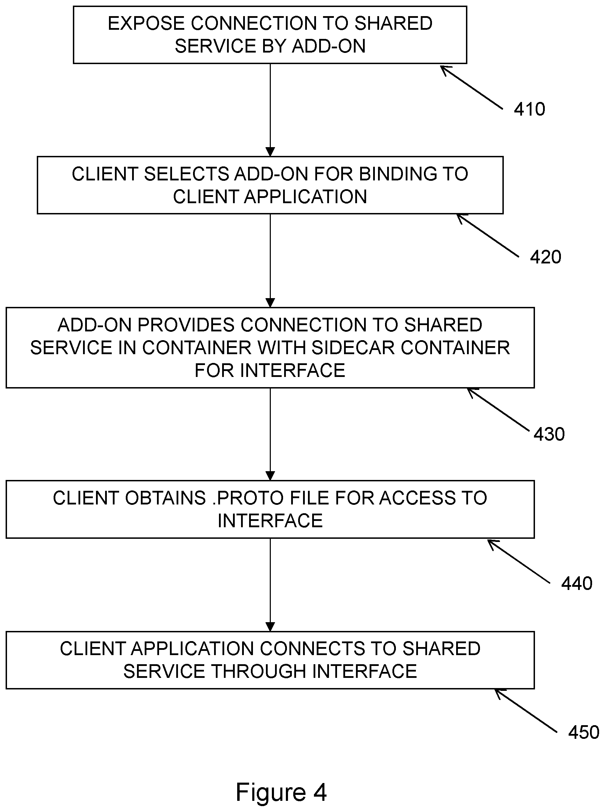

An embodiment of the disclosure using these elements will now be described with reference to Figure 3, which illustrates the relevant architectural elements, and Figure 4, which is a flow diagram indicating the stages involved in a client service accessing a shared service.

Figure 3 illustrates the elements of a computing environment adapted to provide shared services according to an embodiment of the disclosure. This is a distributed computing environment provided by an assemblage of servers or other computing devices - comprising processors, memories, and networking infrastructure - here managed using Kubernetes. While embodiments of the disclosure relate to a managed computing environment, the skilled person will appreciate that the functionality described here may be provided by software other than Kubernetes, and that specific software solutions indicated here illustrate an exemplary implementation, rather than being in themselves essential to the disclosure. The computing environment 30 is therefore managed from a Kubernetes management node 31 having an API server 32 (other Kubernetes elements are not shown positively in Figure 3 so elements relating to the disclosure are illustrated clearly). One Kubernetes node 33 is shown - this is accessed by a shared service creator 34 and client services 35. Each of these are represented by their own computing system which is adapted to interact with the managed computing environment 30. The shared service creator 34 is adapted to access development software 36 for the managed computing environment 30 - here this may be an instance of Akkeris - and all parties are able to interact with an Open Service Broker service 37 for service creation and access. The Kubernetes node 33 has or may have created a plurality of pods 38 - the composition of individual pods will be described further below in the context of providing access to a shared service.

First of all, the shared service software is developed so that a connection to the shared service can be exposed 410 in the managed software infrastructure. In this embodiment, this development includes the use of Akkeris as development software, so that deployment of the shared service can use the Akkeris add-on functionality to allow effective connection of client services to the shared service. The client application can be developed (or its adaption to the computing environment 30 developed) using Akkeris. In the conventional case, access to a resource (such as a database) using Akkeris is possible either by creating a new resource or by binding to an existing resource, which may be achieved by a developer selecting an add-on providing a connection to that existing resource. In embodiments of the disclosure, the same principle is used to provide connections to a shared service - these also become resources selectable as an add-on. This may allow, for example, multiple connection types to the same shared service to be exposed, suitable for different client applications (for example, for applications written in different languages). The shared service software is exposed for access through the managed software environment, with a connection to the shared service provided in the managed computing environment using the OSB "Provision" operation. Such a connection is then made available by use of the add-on functionality of Akkeris, which allows add-ons to be shared from an existing application, so a client service can use the add-on from an existing deployment to bind to the shared service using the "Bind" operation.

By selecting the add-on using the OSB "Bind" operation, the client is able to bind 420 their client application directly to an appropriate connection to the shared service. Use of the "Bind" service results in connection configuration being configured for the client application and the necessary tags to be set to enable the mutating webhook.

The mutating webhook provides access to a suitably configured instances of the shared service. Here, the mutating webhook provides 430 a pod 38 for the connection to the shared service, operating in the container 381. However, in this embodiment, the mutating webhook also instructs Kubernetes to inject a sidecar container 382, which is responsible for enabling the client application to connect to the shared service. This sidecar container provides various functionality. It provides web services through an integrated web service host, which is configured to listen only on the pod's internal network interface. The key function of the sidecar container is to provide client access to the shared service. The shared service is here exposed as an unprotected gRPC interface, internal to the pod. This gRPC interface is adapted to support push, pull and bi-directional communication - it can therefore enable any required connectivity scenario - the sidecar container is also adapted to handle connectivity issues (such as retries and throttling), and may provide caching of data if needed for high-availability.

This gRPC interface is defined by protocol buffer using a proto file - one shared service would provide one .proto definition. This may be distributed 440 as a build-time dependency to client applications through platform specific packages (e.g. NuGet for .NET, npm for NodeJS, etc.). Making use of the gRPC interface requires the client application to add the package for the shared service for their development platform (containing the .proto file) as a dependency. They can then simply use 450 the new functionality - connection to the shared service is achieved, and any further configuration of what the client application is authorised to do with respect to the shared service is a separate matter (and standard development), out of the scope of this disclosure.

Using this approach, for a developer to connect their client application to the shared service, they only need to select that their application needs to connect to an existing add-on, selecting the shared service - the combination of the OSB services, the mutating webhook and the sidecar container provided as a result together provides the client application with connectivity to the shared service.

This approach achieves increased visibility for shared services - they become available as a discoverable resource, like other resources such as databases - together with one-click access. The problem of provision of client libraries for different client services is also addressed - platform-agnostic client libraries may be provided by used of gPRC, and generally issues of interaction between the client application and the shared service are handled automatically. As a result, shared services are easier to use in the managed computing environment, as developers can obtain effectively instant access to the shared service from whatever development platform that they wish to use.

Many modifications may be made to the above examples without departing from the scope of the present disclosure as defined in the accompanying claims.

## Claims

1. A method of providing a shared service in a managed computing environment, the method comprising:
providing a connection to the shared service in the managed computing environment, and providing a binding operation for a client application to bind to the connection to the shared service;
on a client request to connect a client application to the shared service, providing access to the connection to the shared service in a discrete computing environment, whereby the discrete computing environment comprises a first container containing the connection to the shared service and a second container configured for the client application to use the connection to the shared service.

2. The method of claim 1, wherein the managed computing environment is orchestrated by Kubernetes.

3. The method of claim 2, wherein the connection to the shared service is provided by an add-on for sharing configuration with the connection to the shared service in the discrete computing environment.

4. The method of claim 3, wherein the add-on enables use of a mutating webhook to provide access to the connection to the shared service in the discrete computing environment, wherein the second container is a sidecar container.

5. The method of any preceding claim, wherein the second container provides a gPRC interface for the connection to the shared service.

6. The method of claim 6, further comprising providing a .proto file for the gPRC interface to the client.

7. The method of claim 6, further comprising the client application accessing the connection to the shared service through the gPRC interface using the proto file.

8. The method of any preceding claim, wherein the managed computing environment further comprises an open service broker, and wherein creation of a connection to the shared service is provided by an open service broker operation.

9. The method of claim 8, wherein the binding operation is an open service broker operation.

10. A managed computing environment adapted to provide access to shared services, the managed computing environment comprising:
a management application to manage the computing environment;
a connection to the shared service exposed to the managed computing environment; and
a mechanism to provide, in response to a client request to connect a client application to the shared service, access to the connection to the shared service in a discrete computing environment, whereby the discrete computing environment comprises a first container containing the connection to the shared service and a second container configured for the client application to use the connection to the shared service.

11. The managed computing environment of claim 10, wherein the management application is Kubernetes.

12. The managed computing environment of claim 10 or claim 11, wherein the managed computing environment further comprises an open service broker, wherein the open service broker is adapted to provide a connection to the shared service by an open service broker operation.

13. The managed computing environment of claim 12, wherein the open service broker is adapted to provide the binding operation is an open service broker operation.

14. The managed computing environment of any of claims 10 to 13, further comprising a development application for developing client applications for use in the managed computing environment, wherein the development application is adapted to provide an add-on for sharing configuration with the connection to the shared service in the discrete computing environment to enable a client application to connect to the shared service.

15. The managed computing environment of claim 14, wherein the development application is Akkeris.
